# EUROPÄISCHE PATENTANMELDUNG

(11) **EP 1 130 363 A1**
(43) Veröffentlichungstag der Anmeldung: **05.09.2001**
(21) Anmeldenummer: 00104223.3
(22) Anmeldetag: 01.03.2000
(51) Int. Cl.: G01D 11/24, H01R 13/527

(54) **Elektronische Vorrichtung mit einem Gehäuse**

(71) Anmelder: Endress + Hauser Flowtec AG, CH-4153 Reinach BL 1 (CH)
(72) Erfinder: Worreth, Bruno, 68480 Kiffis (FR); Cudini, Roberto, 4055 Basel (CH)
(74) Vertreter: Andres, Angelika

(57) **Zusammenfassung**

Die elektronische Vorrichtung (1) hat ein Gehäuse (10), das einen Anschlussraum (12) und einen Elektronikraum (11) aufweist. Diese beiden Räume sind durch eine Innenwand (13) getrennt, in der ein eine Tiefe T aufweisender Längsschlitz (131) ausgebildet ist, in den ein Durchführungsteil (14) passförmig eingesteckt ist. Das Durchführungsteil soll flammendurchschlagsicher ausgebildet sein. Hierzu umfasst das Gehäuse (10) ferner eine in den Elektronikraum (11) sich erstreckende und darin befestigte, einen Anschlag (142) aufweisende, mit elektronischen Komponenten (143) bestückbare Trägerplatte (141), eine in den Anschlussraum (12) sich erstreckende, die Komponenten der Trägerplatte kontaktierende Leitungsanordnung (144) und ein diese umgebendes, die Form des Längsschlitzes (131) aufweisendes, dem Anschlag (142) angeformtes und den Längsschlitz ausfüllendes Kunststoffteil (146).

## Beschreibung

Die Erfindung betrifft eine elektronische Vorrichtung mit einem Gehäuse, das einen Anschlussraum und einen Elektronikraum aufweist.

Ein Grund für das Vorhandensein von Anschlussraum und Elektronikraum ist z.B., dass eine im Elektronikraum untergebrachte Schaltungsanordnung gegen bewußte oder ungewollte Manipulationen, insb. Berührungen, geschützt sein soll, wenn im Anschlussraum gearbeitet wird, also z.B. eine Leitung oder ein Kabel angeschlossen wird.

Zur Gewährleistung der elektronischen Funktion einer entsprechenden Vorrichtung ist diese nämlich immer an eine elektrische Energieversorgung, z.B. eine Batterie, angeschlossen; ganz überwiegend wird die Vorrichtung aber an einem, insb. öffentlichten, Energieversorgungsnetz betrieben. Ferner sind auch meist Mittel zur Übertragung von Signalen, z.B. von Meß-, und/oder Steuer- und/oder Regelsignalen von und/oder zu der Vorrichtung vorgesehen.

Elektronische Vorrichtungen, insb. Meßgeräte der industriellen Meßtechnik, werden auch an Orten betrieben, an denen die Gefahr einer Explosion besteht, d.h. die elektronische Vorrichtung befindet sich nicht in üblicher Luft, sondern in einer potentiell explosiven Atmosphäre. Beispiele für Umgebungen, in denen potentiell explosive Atmosphären vorhanden sind oder entstehen können, sind etwa Silos für pulverförmige Stoffe, insb. für Mehl, Tankstellen für Kraftfahr- oder Flugzeuge oder Industrie-Anlagen, insb. Anlagen der chemischen Industrie.

Elektronische Vorrichtungen, die in explosionsgefährdeten Bereichen einsetzbar sein sollen, unterliegen daher besonderen Sicherheitsvorschriften, die in Standards oder Normen definiert sind. Hauptziele dieser Standards sind, einen elektrischen Funken, der eine Explosion auslösen kann, zu vermeiden oder zu verhindern, dass ein im Inneren eines abgeschlossenen Raumes entstehender Funke sich auf die Umgebung auswirkt, oder sicherzustellen, dass eine bereits entstandene Flamme auf den Entstehungsraum begrenzt bleibt. Diese Ziele sind auf verschiedene Arten erreichbar, die in entsprechenden Europäischen Normen als Zündschutzarten bezeichnet sind.

So ist z.B. Explosionsschutz nach den Europäischen Normen EN 50 014 und EN 50 018 gegeben, wenn elektronische Vorrichtungen so ausgebildet sind, dass sie der durch diese definierten Zündschutzart "Druckfeste Kapselung (Ex-d)" (Englische Bezeichnung in der Norm: Flameproof enclosure "d") genügen. Diese wird üblicherweise kurz als "Zündschutzart Ex-d" bezeichnet.

Explosionsschutz ist ferner nach den Europäischen Normen EN 50 014 und EN 50 020 gegeben, wenn elektronische Vorrichtungen so ausgebildet sind, dass sie der darin definierten Zündschutzart "Eigensicherheit (Ex-i)" genügen, die üblicherweise kurz als "Zündschutzart Ex-i" bezeichnet wird. Entsprechend dieser Zündschutzart dürfen in der elektronischen Vorrichtung auftretende elektrische Ströme, Spannungen und Leistungen zu jeder Zeit vorgegebene Strom-, Spannungs- und Leistungsgrenzwerte nicht überschreiten.

Diese drei Grenzwerte sind so gewählt, dass im Fehlerfall oder durch einen Kurzschluss der maximal freigesetzte Energiebetrag nicht dazu ausreicht, einen zündfähigen Funken zu erzeugen. Die Spannung wird z.B. durch Z-Dioden, der Strom z.B. durch Widerstände und die Leistung durch entsprechende Kombination von spannungs- und strombegrenzenden Komponenten unter den vorgegebenen Grenzwerten gehalten.

In der Europäischen Norm EN 50 019 ist eine weitere Zündschutzart mit der Bezeichnung "Erhöhte Sicherheit (Ex-e)" angegeben, die üblicherweise kurz als "Zündschutzart Ex-e" bezeichnet wird. Bei elektronischen Vorrichtungen, die nach dieser Zündschutzart ausgebildet sind, wird der Explosionsschutz dadurch erzielt, dass die räumlichen Abstände zwischen zwei elektrischen Leitern, die unterschiedliche Potentiale haben, so groß sind, dass eine Funkenbildung aufgrund dieser Distanz nicht auftreten kann. Dies kann jedoch unter Umständen dazu führen, dass Schaltungsanordnungen sehr große Abmessungen aufweisen müssen, um diesen Anforderungen zu genügen.

In den USA, in Kanada, in Japan und in anderen Ländern gibt es mit diesen Europäischen Normen vergleichbare Standards.

Elektronische Vorrichtungen, die so ausgebildet sind, dass sie der Zündschutzart Ex-d genügen, müssen ein druckfestes Gehäuse oder einen druckfesten Gehäuseteil aufweisen. Dadurch ist verhindert, dass eine im Inneren des Gehäuses bzw. eines Teilraums von ihm möglicherweise auftretende Explosion nach außen oder in einen anderen Teilraum, z.B vom Elektronik- in den Anschlussraum, durchschlagen kann. Im Standard sind Minimalwerte für die Länge und die Weite von Schlitzen oder Spalten etc. zwischen Teilräumen festgelegt, damit die Schlitze oder Spalte etc. flammendurchschlagsicher sind.

Damit Gehäuse mit druckfesten Teilen eine ausreichende mechanische Festigkeit aufweisen, sind sie dickwandig ausgebildet; somit sind sie schwer und teuer. Eine lektronische Vorrichtung nach der Zündschutzart Ex-d auszubilden erfordert daher ein geschlossenes druckfestes und damit schweres und teures Gehäuse bzw. ein Gehäuse mit einem entsprechend dimensionierten Gehäuseteil.

In der EP-A 945 714 ist eine elektronische Vorrichtung mit einem Gehäuse beschrieben, das einen Elektronikraum und einen Anschlussraum aufweist, der
- der Zündschutzart Ex-d oder der Zündschutzart Ex-e genügt,
- vom Elektronikraum, in dem sich eine der Zündschutzart Ex-i genügende Schaltungsanordnung befindet, räumlich vollständig getrennt ist und
- mit dem Elektronikraum über eine handelsübliche druckfeste Durchführung elektrisch verbunden ist.

Da bei dieser elektronischen Vorrichtung im Elektronikraum bereits eine der Zündschutzart Ex-i genügende Schaltungsanordnung vorhanden ist, können von ihr weder Funken noch Flammen ausgehen, so dass die Durchführung nicht flammendurchschlagsicher ausgebildet zu werden braucht.

Werden dagegen im Elektronikraum Schaltungsanordnungen, die der Zündschutzart Ex-i nicht genügen, angeordnet, so ist die zwischen Anschlussraum und Elektronikraum erforderliche elektrische Durchführung so auszubilden, dass sie flammendurchschlagsicher ist.

Eine Aufgabe der Erfindung besteht darin, eine elektronische Vorrichtung anzugeben, bei der die erwähnte Flammendurchschlagsicherheit auf konstruktiv elegante und kostengünstige Art und Weise erreicht ist.

Zur Lösung dieser Aufgabe besteht die Erfindung in einer elektronischen Vorrichtung mit einem Gehäuse,
- das einen Anschlussraum und einen Elektronikraum aufweist,
- wobei der Anschlussraum vom Elektronikraum durch eine Innenwand getrennt ist,
-- in der ein eine Tiefe T aufweisender Längsschlitz ausgebildet ist,
- -- in den ein Durchführungsteil passförmig eingesteckt ist, und
- das umfasst:
-- eine in den Elektronikraum sich erstreckende und darin befestigte, einen Anschlag aufweisende, mit elektronischen Komponenten bestückbare Trägerplatte,
-- eine in den Anschlussraum sich erstreckende, die Komponenten der Trägerplatte kontaktierende Leitungsanordnung und
-- ein diese umgebendes, die Form des Längsschlitzes aufweisendes, dem Anschlag angeformtes und den Längsschlitz ausfüllendes Kunststoffteil.

Nach einer ersten bevorzugten Ausgestaltung der Erfindung
- befindet sich das Gehäuse in einem explosionsgefährdeten Bereich,
- ist der Elektronikraum nach Zündschutzart Ex-d dimensioniert,
- ist im Elektronikraum eine nach Zündschutzart Ex-d ausgebildete Schaltungsanordnung untergebracht und
- ist die Tiefe T des Längsschlitzes mindestens gleich der Länge der für die Zündschutzart Ex-d vorgeschriebenen Spaltlänge in Abhängigkeit von der Spaltbreite ist.

Nach einer zweiten bevorzugten Ausgestaltung der Erfindung oder deren erster Ausgestaltung ist der Anschlussraum
- entweder entsprechend der Zündschutzart Ex-d
- oder entsprechend der Zündschutzart Ex-e
- oder entsprechend einer weiteren Zündschutzart
- oder, ohne einer Zündschutzart zu genügen, ausgebildet.

Nach einer dritten bevorzugten Ausgestaltung der Erfindung oder deren Ausgestaltungen bestehen das Kunststoffteil und der Anschlag aus Polybutylenterephtalat.

Ein Vorteil der Erfindung besteht darin, dass die Flammendurchschlagsicherheit zwischen Anschlussraum und Elektronikraum auf einfache Weise einerseits durch die Dimensionierung des Längsschlitzes in der Trennwand und andererseits durch Zusammenfassung der Trägerplatte, der zugehörigen Leitungsanordnung und des Kunststoffteils zu einem vorgefertigten Durchführungsteil erreicht wird. Während der Herstellung der Vorrichtung braucht diese Einheit in den Längsschlitz nur noch eingesteckt zu werden.

Die Erfindung und weitere Vorteile werden nun anhand der Figuren der Zeichnung, in denen ein Ausführungsbeispiel einer Vorrichtung dargestellt ist, näher erläutert; gleiche Teile sind in den Figuren mit gleichen Bezugszeichen versehen.
- Fig. 1: zeigt perspektivisch ein Gehäuse einer elektronischen Vorrichtung mit Sicht in den Elektronikraum und in den Anschlussraum ohne eingesetztes Durchführungsteil;
- Fig. 2: zeigt perspektivisch aus einer anderen Richtung als in Fig. 1 das Gehäuse mit Sicht in den Elektronikraum bei eingesetztem Durchführungsteil;
- Fig. 3: zeigt eine Ansicht des Gehäuses von Fig. 1 mit senkrechter Sicht auf den Anschlussraum bei eingesetztem Durchführungsteil;
- Fig. 4: zeigt eine Ansicht des Gehäuses von Fig. 1 mit senkrechter Sicht auf den Elektronikraum bei eingesetztem Durchführungsteil; und
- Fig. 5: zeigt perspektivisch ein Durchführungsteil.

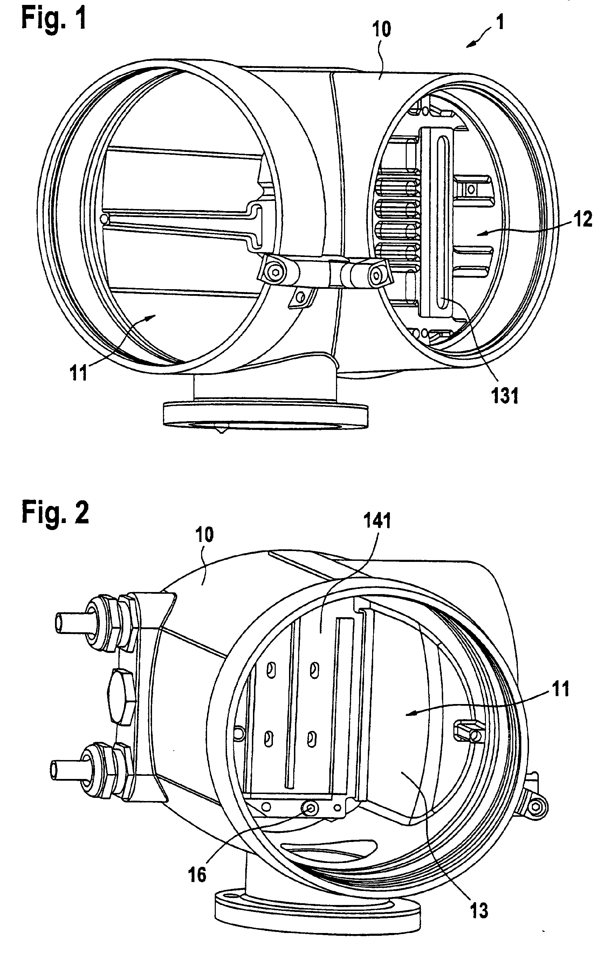

In Fig. 1 ist perspektivisch ein Gehäuse 10 einer elektronischen Vorrichtung 1 dargestellt, die einen Elektronikraum 11 und einen Anschlussraum 12 aufweist, in die die Fig. 1 die Sicht zulässt. Üblicherweise befinden sich im Elektronikraum 11 elektronische und mechanische Komponenten, die z.B zu einer Auswerte-Elektronik eines Messgeräts, z.B. für Druck, Füllstand, Temperatur, pH-Wert, Masse- oder Volumendurchfluss oder Leitfähigkeit etc., gehören.

Ferner befinden sich üblicherweise im Anschlussraum 12 elektronische und mechanische Komponenten, die dem Anschluss von äußeren Zuleitungen für die Energieversorgung und/oder für die Weiterleitung von von der Auswerte-Elektronik erzeugten Signalen dienen.

Wie in Fig. 2 dargestellt ist, sind Elektronikraum 11 und Anschlussraum 12 im Gehäuse 10 durch eine Innenwand 13 räumlich vollständig voneinander getrennt, in der ein Längsschlitz 131 ausgebildet ist. Dieser hat senkrecht zu seiner Längsrichtung eine Tiefe T, die bevorzugt mindestens gleich derjenigen Länge ist, die von der Norm für die Flammendurchschlagsicherheit in Abhängigkeit von seiner Breite vorgeschrieben ist.

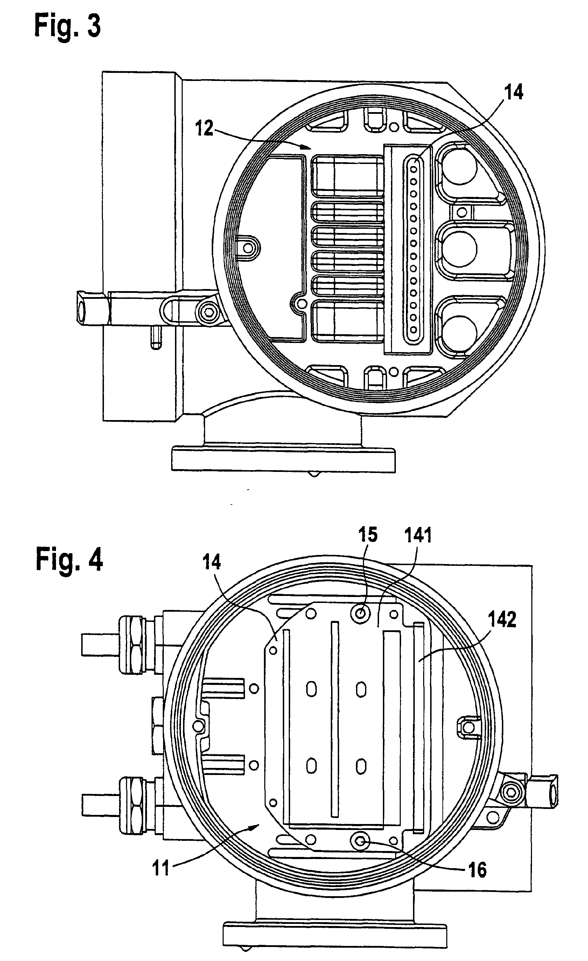

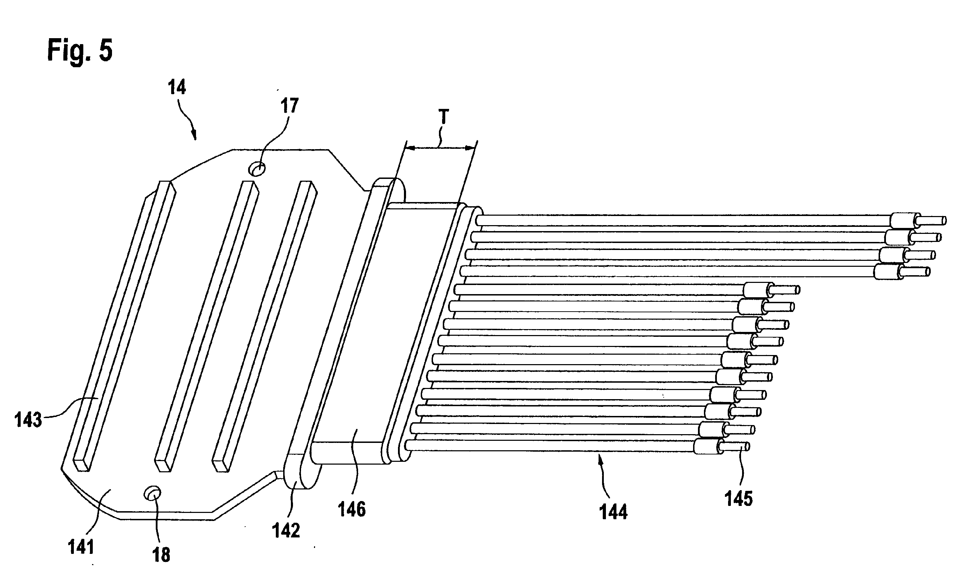

In den Längsschlitz 131 ist, wie die Fig. 2 bis 4 jeweils zeigen, ein Durchführungsteil 14 passförmig eingesteckt, das in Fig. 5 separat dargestellt ist. Es umfasst eine in den Elektronikraum 11 sich erstreckende Trägerplatte 141, die im Elektronikraum befestigt, z.B. festgeschraubt, ist, vgl. die beiden Schrauben 15, 16, die in im Gehäuse 10 entsprechend vorgesehene Gewinde eingeschraubt sind, und die beiden zugehörigen Bohrungen 17, 18 der Trägerplatte 141.

Das Durchführungsteil 14 hat ferner einen Anschlag 142, der, bevorzugt unter Zwischenlage einer Ringdichtung, an einer längsschlitz-seitigen Fläche der Innenwand 13 anliegt.

Die Trägerplatte 14 kann mit elektronischen Komponenten 143 bestückt sein und ist hierzu bevorzugt als gedruckte Leiterplatte ausgebildet; die Komponenten 143 sind in Fig. 5 nur schematisch angedeutet.

In den Anschlussraum 12 erstreckt sich eine, bevorzugt flexible, Leitungsanordnung 144, die z.B. die Komponenten 143 der Trägerplatte 14 kontaktiert. In Fig. 5 ist eine bevorzugte Ausgestaltung der Leitungsanordnung 144 in Form von mehreren Einzelleitungen dargestellt. Diese können aber auch zu einem Flachkabel zusammengefasst sein. Die Einzelleitungen sind am jeweiligen freien Ende mit Steckern 145 versehen.

Die Leitungsanordnung 144 ist von einem Kunststoffteil 146 umgeben, das die räumliche Form des Längsschlitzes 131 aufweist, so dass es diesen praktisch vollständig ausfüllt, in ihn also eingepasst werden kann, wobei jedoch z.B. entsprechend den eingangs genannten Normen ein Luftspalt von maximal 0,15 mm zugelassen werden kann.

Trägerplatten-seitig ist an das Kunststoffteil 146 der Anschlag 142 einstückig angeformt. Die Breite des Kunststoffteils 146 ist gleich der Tiefe T des Längsschlitzes 131. Der Anschlag 142 und das Kunststoffteil 146 bestehen bevorzugt aus Polybutylenterephtalat.

Wenn sich das Gehäuse 10 in einem explosionsgefährdeten Bereich befindet, ist der Elektronikraum 11 bevorzugt nach Zündschutzart Ex-d dimensioniert. Ferner ist die Tiefe T des Längsschlitzes 131 mindestens gleich der Länge der für die Zündschutzart Ex-d vorgeschriebenen Funkenstrecke.

Der Anschlussraum 12 kann in jedem Fall entweder entsprechend der Zündschutzart Ex-d oder entsprechend der Zündschutzart Ex-e oder entsprechend einer anderen Zündschutzart, z.B. Ex-m, oder ohne einer Zündschutzart zu genügen ausgebildet sein.

## Patentansprüche

1. Elektronische Vorrichtung (1) mit einem Gehäuse (10),
- das einen Anschlussraum (12) und einen Elektronikraum (11) aufweist,
- wobei der Anschlussraum vom Elektronikraum durch eine Innenwand (13) getrennt ist,
-- in der ein eine Tiefe T aufweisender Längsschlitz (131) ausgebildet ist,
--- in den ein Durchführungsteil (14) passförmig eingesteckt ist, und
- das umfasst:
-- eine in den Elektronikraum (11) sich erstreckende und darin befestigte, einen Anschlag (142) aufweisende, mit elektronischen Komponenten (143) bestückbare Trägerplatte (141),
-- eine in den Anschlussraum (12) sich erstreckende, die Komponenten der Trägerplatte kontaktierende Leitungsanordnung (144) und
-- ein diese umgebendes, die Form des Längsschlitzes (131) aufweisendes, dem Anschlag (142) angeformtes und den Längsschlitz ausfüllendes Kunststoffteil (146).

2. Elektronische Vorrichtung nach Anspruch 1, bei der
- das Gehäuse sich in einem explosionsgefährdeten Bereich befindet und
- der Elektronikraum nach Zündschutzart Ex-d dimensioniert ist,
- im Elektronikraum eine nach Zündschutzart Ex-d ausgebildete Schaltungsanordnung untergebracht ist und
- die Tiefe T des Längsschlitzes mindestens gleich der Länge der für die Zündschutzart Ex-d vorgeschriebenen Spaltlänge in Abhängigkeit von der Spaltbreite ist.

3. Elektronische Vorrichtung nach Anspruch 1 oder 2, bei der der Anschlussraum (12)
- entweder entsprechend der Zündschutzart Ex-d
- oder entsprechend der Zündschutzart Ex-e
- oder entsprechend einer weiteren Zündschutzart
- oder, ohne einer Zündschutzart zu genügen, ausgebildet ist.

4. Elektronische Vorrichtung nach einem der Ansprüche 1 bis 3, bei der das Kunststoffteil (146) und der Anschlag (142) aus Polybutylenterephtalat bestehen.
